# EUROPEAN PATENT SPECIFICATION

(11) **EP 4 242 603 B1**
(45) Date of publication and mention of the grant of the patent: **16.10.2024**
(21) Application number: 23159060.5
(22) Date of filing: 28.02.2023
(51) Int. Cl.: G01G 19/393, G01G 11/08, G01G 13/02

(54) **WEIGHING DEVICE**
WÄGEVORRICHTUNG
DISPOSITIF DE PESAGE

(30) Priority: 11.03.2022 JP 2022038598
(43) Date of publication of application: 13.09.2023
(73) Proprietor: ISHIDA CO., Ltd., Kyoto-shi, Kyoto 606-8392 (JP)
(72) Inventor: KAGEYAMA, Toshiharu, Ritto-shi, Shiga, 520-3026 (JP)
(74) Representative: Gill Jennings & Every LLP

(56) References cited:
- WO-A1-2016/117148

## Description

### BACKGROUND

### TECHNICAL FIELD

The present invention relates to a weighing device.

### BACKGROUND ART

Conventionally, there is known a weighing device including screws that rotate in troughs to convey an article put in the troughs toward a weighing unit (see, for example, Patent Literature 1 and Patent Literature 2).

### Citation List

### Patent Literature

Patent Literature 1: JP 6713666 B2
Patent Literature 2: WO 2016/117148 A1

### SUMMARY OF THE INVENTION

### TECHNICAL PROBLEM

However, in the above-described weighing device, when an article is stuck between the trough and the screw, there is a problem that it is difficult to remove, which is not preferable in terms of hygiene. In addition, in a case where the screw is driven in a state where the article is stuck between the trough and the screw, there is a problem that the article may be damaged and the final commercial value is lowered.

Therefore, the present invention has been made in view of the problems described above, and an object is to provide a weighing device capable of easily removing an article stuck between a trough and a screw and reducing damage to the article.

### SOLUTION TO PROBLEM

A weighing device according to one embodiment is summarized as including: a weighing unit that weighs a weight value of an article put from an outside; a trough that extends toward the weighing unit and has an open upper portion; a screw that rotates in the trough to convey the article put in the trough toward the weighing unit; a drive portion that rotates the screw ; and a control unit that controls the rotation, characterized in that the control unit causes the screw to convey the article by switching between a first rotation in which the article is conveyed in a direction of approaching the weighing unit and a second rotation in which the article is conveyed in a direction away from the weighing unit, on the basis of a torque generated at the time of the rotation or a rotation speed of the rotation.

### ADVANTAGEOUS EFFECTS OF INVENTION

According to an embodiment of the present invention, it is possible to provide a weighing device capable of easily removing an article stuck between a trough and a screw and reducing damage to the article.

### BRIEF DESCRIPTION OF DRAWINGS

Fig. 1 is a diagram describing an example of an overall configuration of a weighing device 1 according to an embodiment.
Fig. 2 is an enlarged diagram of a region A in Fig. 1.
Fig. 3 is a diagram for describing an example of a case of being stuck between a trough 21 and a screw 22 of the weighing device 1 according to an embodiment.
Fig. 4 is a flowchart illustrating an example of an operation of the weighing device 1 according to an embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

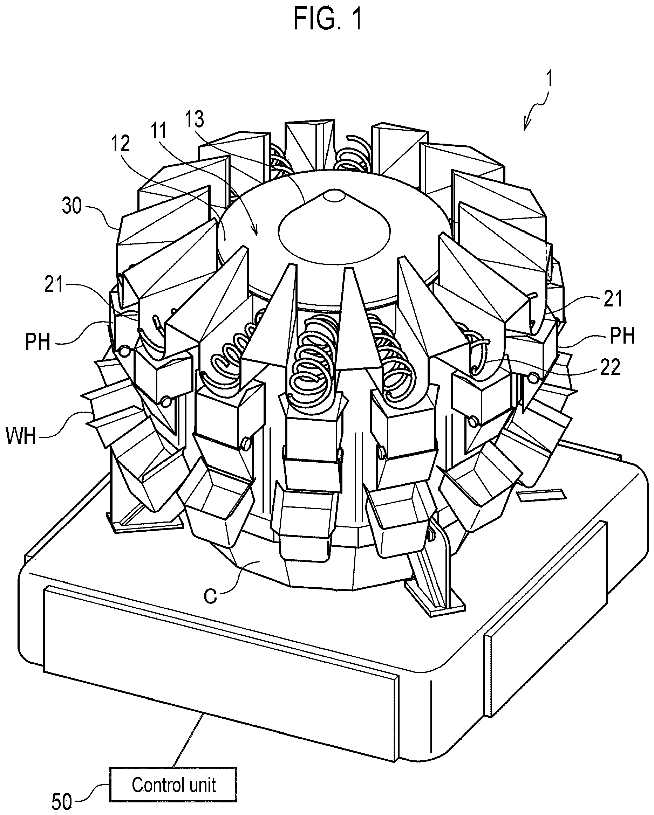

Hereinafter, the weighing device 1 according to a first embodiment of the present invention will be described with reference to Figs. 1 to 4.

In the present embodiment, a combination weighing device including a plurality of hoppers disposed in an annular shape will be described as an example of the weighing device 1, but the present invention is applicable to any type of weighing device including the troughs 21 and the screws 22 described below. Specifically, the present invention is also applicable to a linear combination weighing device in which the troughs 21 are disposed in a row.

As illustrated in Fig. 1, the weighing device 1 according to the present embodiment includes a dispersion table 11, the plurality of troughs 21, the plurality of screws 22, a plurality of block bodies 30, a plurality of drive portions 40, a control unit 50, a plurality of pool hoppers PH, a plurality of weighing hoppers WH, and a discharge chute C.

The dispersion table 11 rotates to disperse an article supplied from the outside (in the example of Fig. 1, above) to convey the article to each of the plurality of troughs 21.

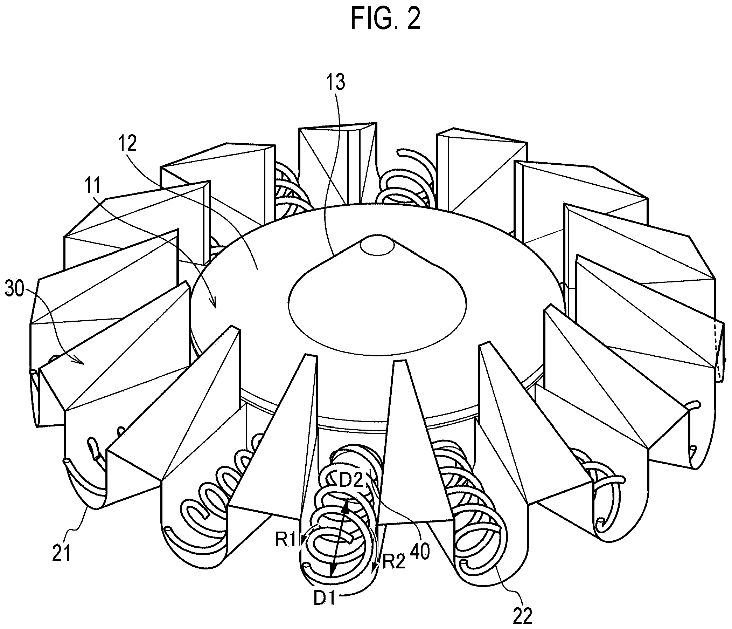

As illustrated in Figs. 1 and 2, for example, the dispersion table 11 has a shape in which a conical portion 13 having an acute apex angle is coaxially overlapped at the center of a conical portion 12 having an obtuse apex angle. The diameter of the conical portion 12 is larger than the diameter of the conical portion 13. Here, the surfaces of the conical portion 12 and the conical portion 13 may be embossed. With such a configuration, an article hardly adhere to the surfaces of the conical portion 12 and the conical portion 13.

As illustrated in Fig. 1, each trough 21 is a member that is disposed around the dispersion table 11, extends toward the hopper, and has an open upper portion.

In the example of Fig. 1, fourteen troughs 21 are radially arranged around the dispersion table 11, but the number and disposition of the troughs 21 are not limited thereto. The number and disposition of the troughs 21 may be appropriately changed according to, for example, the number and disposition of the pool hoppers PH (hoppers) to be described below.

Each screw 22 rotates in the trough 21 to convey the article put in the trough 21 toward the hopper.

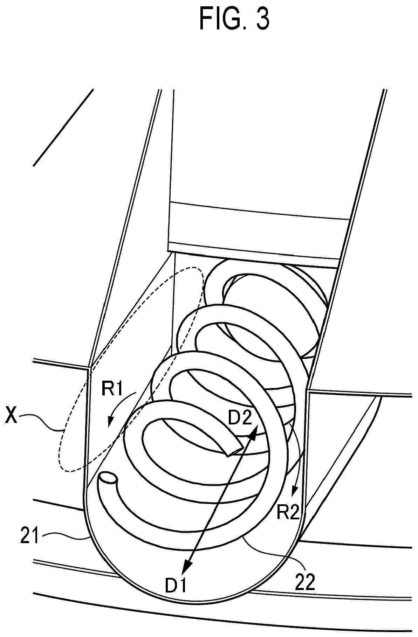

As illustrated in Figs. 2 and 3, for example, the screw 22 includes two rods made of metal or resin bent in a spiral shape. Note that the screw 22 may have another shape obtained, for example, by combining members having a linear shape. Specifically, the screw 22 may have a shape including one or three rods. In short, there is no problem as long as the number of rods constituting the screw 22 is at least one.

The drive portion 40 rotates the screw 22. For example, the drive portion 40 is a motor. The screw 22 is supported by a drive shaft of the drive portion 40.

Each block body 30 is provided to restrict the article sent from the dispersion table 11 from entering between the adjacent troughs 21.

Each pool hopper PH temporarily holds the article supplied from each trough 21. A gate (not illustrated) is provided at a lower portion of each pool hopper PH, and the article retained in the pool hopper PH is discharged to the weighing hopper WH provided below the gate as a result of an opening and closing operation of the gate.

Each weighing hopper WH is configured to temporarily hold the article discharged by each pool hopper PH and weigh the weight value of the article. A gate (not illustrated) is provided at a lower portion of each weighing hopper WH, and the article retained in each weighing hopper WH is discharged to the discharge chute C as a result of an opening and closing operation of the gate.

Here, the weighing hopper WH constitutes the weighing unit that weighs the weight value of the article put from the outside. Note that the weighing device 1 according to the present embodiment may be configured such that a booster hopper BH is provided between the weighing hopper WH and the discharge chute C.

The control unit 50 described below performs combination calculation on the basis of the weight value of the article weighed by the weighing hopper WH, and discharges the article from a particular weighing hopper WH among the plurality of hoppers on the basis of a result of the combination calculation.

The discharge chute C is configured to collect the articles discharged from the weighing hoppers WH selected by the combination calculation at one place and discharge the articles downward. The articles discharged from the discharge chute C are supplied to a subsequent packaging device or the like.

The control unit 50 controls the rotation of the screws 22. Specifically, as illustrated in Figs. 2 and 3, the control unit 50 causes the screws 22 to convey the articles by switching between a first rotation R1 (forward rotation) in which the article is conveyed in a direction D1 of approaching the weighing unit and a second rotation R2 (reverse rotation) in which the article is conveyed in a direction D2 away from the weighing unit on the basis of the torque generated at the time of rotation of the screws 22 or the rotation speed of the rotation of the screws 22.

Note that, in the normal state, the control unit 50 causes the screws 22 to rotate as the first rotation R1.

The control unit 50 can detect that the article is stuck in a portion between the trough 21 and the screw 22 (for example, a portion X in Fig. 3) from the torque generated at the time of rotation of the screw 22 or the rotation speed of the rotation of the screw 22.

When detecting that the article is stuck between the trough 21 and the screw 22, the control unit 50 switches the rotation of the screw 22 from the first rotation to the second rotation.

As a result, the article is lifted upward from the portion X by the second rotation R2 of the screw 22, and is released from the state of being stuck between the trough 21 and the screw 22 since the upper portion of the trough 21 is opened. Thereafter, the article falls between the rods constituting the screw 22 and can be normally conveyed.

Thus, with the above-described configuration, the article stuck between the trough 21 and the screw can be easily removed.

In addition, after switching the rotation of the screw 22 to the second rotation R2 to release the article, the control unit 50 may switch the rotation of the screw 22 from the second rotation R2 to the first rotation R1 to continue the conveyance of the article.

With such a configuration, even when the article is stuck between the trough 21 and the screw, the operation of the weighing device 1 can be continued without physically or electrically stopping the weighing device 1.

Note that after switching the rotation of the screw 22 to the second rotation R2 to release the article, the control unit 50 may stop the rotation operation of the screw 22.

For example, in the case of detecting that the article is stuck in the portion between the trough 21 and the screw 22 a predetermined number of times, the control unit 50 may switch the rotation of the screw 22 to the second rotation R2 to release the article and then stop the rotation operation of the screw 22.

In addition, in a case where the state in which the article is stuck in the portion between the trough 21 and the screw 22 within a predetermined period recurs, the control unit 50 may switch the rotation of the screw 22 to the second rotation R2 to release the article and then stop the rotation operation of the screw 22.

With these configurations, since the article is frequently stuck, the operator can confirm whether there is a problem in the state of the weighing device 1 by stopping the rotation operation of the screw 22.

Note that the predetermined number of times described above can be arbitrarily set by the operator, such as three times or five times.

Note that, in the case of detecting that the article is stuck in the portion between the trough 21 and the screw 22 or after switching the rotation of the screw 22 to the second rotation R2 to release the article, the control unit 50 may notify the operator by an alarm or the like.

Here, in the case of performing control so that the screw 22 operates using a certain rotation speed, when the torque of the drive shaft of the drive portion 40 becomes equal to or greater than a predetermined torque, the control unit 50 may determine that the article is stuck in the portion between the trough 21 and the screw 22, and switch the rotation of the screw 22 from the first rotation R1 to the second rotation R2. In this case, the control unit 50 can acquire information regarding the torque from the motor driver of the motor constituting the drive portion 40.

Note that the weighing device 1 provided with a torque limiter has the specifications to be physically or electrically stopped when the torque of the drive shaft of the drive portion 40 becomes equal to or greater than a specified value. Thus, the above-described predetermined torque is set to a value smaller than the specified value of the torque limiter.

In addition, in the case of controlling the rotation operation of the screw 22 so that the torque of the drive shaft of the drive portion 40 becomes constant, the control unit 50 may switch the rotation of the screw 22 from the first rotation R1 to the second rotation R2 when the rotation speed of the screw 22 becomes equal to or less than a predetermined speed. In this case, the control unit 50 can acquire information regarding the rotation speed of the drive shaft from the driver of the motor constituting the drive portion 40.

More specifically, in a case where the drive portion 40 is operated with a constant torque when there is no article on the trough 21, the rotation rate of the motor increases to a point at which it is balanced with the rotation loss of the motor, a gear head, and each part constituting the drive portion 40. Hence, the control unit 50 operates the drive portion 40 within a range of a constant torque while a preset speed is an upper limit value.

In addition, in a case where the drive portion 40 is operated with a certain torque when the article is present on the trough 21, the control unit 50 operates the drive portion 40 at equal to or less than the upper limit value of the speed set in a case where there is no article and with equal to or less than a constant torque. In this case, the torque increases in a state where the upper limit value of the speed is reached, or a constant torque is reached and the speed becomes lower than the speed upper limit value. In this state, when the rotation speed is lower than a preset threshold value, the control unit 50 switches the rotation of the screw 22 from the first rotation R1 to the second rotation R2.

When the rotation of the screw 22 is switched from the first rotation R1 to the second rotation R2, the control unit 50 may rotate the screw 1/4 turn or more as the second rotation.

As illustrated in Fig. 3, the place where the article is likely to be stuck is often at the upper half position of the screw 22. Thus, as described above, by rotating the screw 1/4 turn or more as the second rotation, the article can be released in most cases.

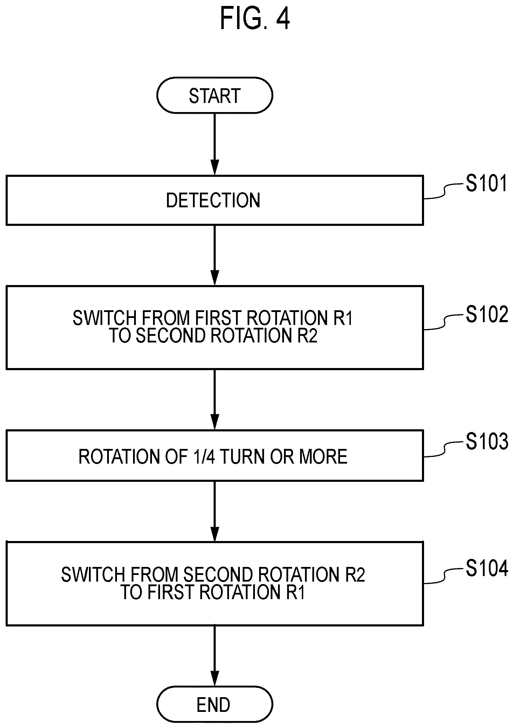

Hereinafter, an example of the operation of the weighing device 1 according to the present embodiment will be described with reference to Fig. 4.

As illustrated in Fig. 4, in step S101, the control unit 50 detects that the article is stuck in the portion between the trough 21 and the screw 22 (for example, the portion X in Fig. 3) from the torque generated at the time of the rotation of the screw 22 or the rotation speed of the rotation of the screw 22.

In step S102, the control unit 50 switches the rotation of the screw 22 from the first rotation R1 to the second rotation R2.

In step S103, when the rotation of the screw 22 is switched from the first rotation R1 to the second rotation R2, the control unit 50 rotates the screw 1/4 turn or more as the second rotation to release the article in the state of being stuck between the trough 21 and the screw 22.

In step S104, the control unit 50 switches the rotation of the screw 22 from the second rotation R2 to the first rotation R1 and continues the operation.

According to the present embodiment, the article stuck between the trough 21 and the screw 22 can be easily removed.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

For example, the dispersion table 11 may be configured to convey the article to each of the plurality of troughs 21 by vibration.

### Reference Signs List

- 1: Weighing device
- 11: Dispersion table
- 12, 13: Conical portion
- 21: Trough
- 22: Screw
- 30: Block body
- 40: Drive portion
- 50: Control unit
- BH: Booster hopper
- PH: Pool hopper
- WH: Weighing hopper
- C: Discharge chute
- R1: First rotation
- R2: Second rotation

## Claims

1. A weighing device (1) comprising:
a weighing unit (WH) that weighs a weight value of an article put from an outside;
a trough (21) that extends toward the weighing unit and has an open upper portion;
a screw (22) that rotates in the trough (21) to convey the article put in the trough (21) toward the weighing unit;
a drive portion (40) that rotates the screw (22); and
a control unit (50) that controls the rotation, **characterized in that**
the control unit (50) causes the screw (22) to convey the article by switching between a first rotation in which the article is conveyed in a direction of approaching the weighing unit and a second rotation in which the article is conveyed in a direction away from the weighing unit, on the basis of a torque generated at the time of the rotation or a rotation speed of the rotation.

2. The weighing device (1) according to claim 1, **characterized in that**:
the control unit (50) releases the article stuck between the trough (21) and the screw (22) by switching from the first rotation to the second rotation.

3. The weighing device (1) according to claim 2, **characterized in that**:
the control unit (50) continues conveyance of the article by switching from the second rotation to the first rotation after switching to the second rotation to release the article.

4. The weighing device (1) according to claim 2 or claim 3, **characterized in that**:
the control unit (50) stops a rotation operation of the screw (22) after switching to the second rotation to release the article.

5. The weighing device (1) according to any of the preceding claims, **characterized in that**:
the control unit (50) switches from the first rotation to the second rotation when the torque becomes equal to or greater than a predetermined torque.

6. The weighing device (1) according to any of claims 1 to 4, **characterized in that**:
the control unit (50):
controls the rotation operation such that the torque becomes constant, and
switches from the first rotation to the second rotation when the rotation speed becomes equal to or lower than a predetermined speed.

7. The weighing device (1) according to any of the preceding claims, **characterized in that**:
the control unit (50) rotates the screw (22) 1/4 turn or more as the second rotation when the first rotation is switched to the second rotation.

## Patentansprüche

1. Wägevorrichtung (1), umfassend:
Eine Wiegeeinheit (WH), die den Gewichtswert eines von außen eingegebenen Artikels wiegt;
einen Trog (21), der sich in Richtung der Wiegeeinheit erstreckt und einen offenen oberen Teil aufweist;
eine Schnecke (22), die sich im Trog (21) dreht, um den in den Trog (21) eingegebenen Artikel in Richtung der Wiegeeinheit zu fördern;
einen Antriebsteil (40), der die Schnecke (22) dreht; und
eine Steuereinheit (50), welche die Drehung steuert, **dadurch gekennzeichnet, dass**
die Steuereinheit (50) die Schnecke (22) veranlasst, den Artikel durch Umschalten zwischen einer ersten Rotation, in welcher der Artikel in eine Richtung der Annäherung an die Wiegeeinheit befördert wird und einer zweiten Drehung, in welcher der Artikel in eine Richtung von der Wiegeeinheit wegbefördert wird, auf Basis eines Drehmoments zu fördern, das zur Zeit der Rotation oder einer Drehzahl der Rotation erzeugt wird.

2. Wägevorrichtung (1) nach Anspruch 1, **dadurch gekennzeichnet, dass**:
Die Steuereinheit (50) den zwischen dem Trog (21) und der Schnecke (22) festsitzenden Artikel durch Umschalten von der ersten Rotation auf die zweite Rotation freigibt.

3. Wägevorrichtung (1) nach Anspruch 2, **dadurch gekennzeichnet, dass**:
Die Steuereinheit (50) die Förderung des Artikels, durch Umschalten von der zweiten Rotation auf die erste Rotation, nach dem Umschalten auf die zweite Rotation, fortsetzt, um den Artikel freizugeben.

4. Wägevorrichtung (1) nach Anspruch 2 oder Anspruch 3, **dadurch gekennzeichnet, dass**:
Die Steuereinheit (50) einen Rotationsbetrieb der Schnecke (22), nach dem Umschalten auf die zweite Rotation, stoppt, um den Artikel freizugeben.

5. Wägevorrichtung (1) nach irgendeinem der vorhergehenden Ansprüche, **dadurch gekennzeichnet, dass**:
Die Steuereinheit (50) von der ersten Rotation auf die zweite Rotation umschaltet, wenn das Drehmoment gleich oder größer als ein vorbestimmtes Drehmoment wird.

6. Wägevorrichtung (1) nach irgendeinem der Ansprüche 1 bis 4, **dadurch gekennzeichnet, dass**:
Die Steuereinheit (50):
Den Rotationsbetrieb so steuert, dass das Drehmoment konstant wird, und
von der ersten Rotation auf die zweite Rotation umschaltet, wenn die Drehzahl gleich oder geringer als eine vorbestimmte Geschwindigkeit wird.

7. Wägevorrichtung (1) nach irgendeinem der vorhergehenden Ansprüche, **dadurch gekennzeichnet, dass**:
Die Steuereinheit (50) die Schnecke (22) eine 1/4 Drehung oder mehr als die zweite Rotation dreht, wenn die erste Rotation auf die zweite Rotation geschaltet wird.

## Revendications

1. Dispositif de pesage (1) comprenant :
un module de pesage (WH) pesant une valeur de poids d'un article introduit de l' extérieur ;
un bac (21) déployé vers le module de pesage, et possédant une partie supérieure ouverte ;
une vis (22) tournant dans le bac (21) pour transporter l'article introduit dans le bac (21) vers le module de pesage ;
une partie motrice (40) faisant tourner la vis (22) ; et
un module de commande (50) commandant la rotation,
**caractérisé en ce que**
le module de commande (50) assure le transport, par la vis (22), de l'article en alternant entre une première rotation, dans laquelle l'article est transporté dans une direction le rapprochant du module de pesage, et une deuxième rotation, dans laquelle l'article est transporté dans une direction opposée au module de pesage, en fonction d'un couple produit lors de la rotation ou d'une vitesse de rotation de la rotation.

2. Dispositif de pesage (1) selon la revendication 1, **caractérisé en ce que** :
le module de commande (50) débloque l'article coincé entre le bac (21) et la vis (22) en passant de la première rotation à la deuxième rotation.

3. Dispositif de pesage (1) selon la revendication 2, **caractérisé en ce que** :
le module de commande (50) continue le transport de l'article en passant de la deuxième rotation à la première rotation après être passé à la deuxième rotation pour débloquer l'article.

4. Dispositif de pesage (1) selon la revendication 2 ou la revendication 3, **caractérisé en ce que** :
le module de commande (50) arrête l'actionnement de la rotation de la vis (22) après un passage à la deuxième rotation pour débloquer l'article.

5. Dispositif de pesage (1) selon une quelconque des revendications précédentes, **caractérisé en ce que** :
le module de commande (50) passe de la première rotation à la deuxième rotation lorsque le couple devient égal ou supérieur à un couple prédéterminé.

6. Dispositif de pesage (1) selon une quelconque des revendications 1 à 4, **caractérisé en ce que** :
le module de commande (50) :
commande l'actionnement de la rotation de sorte que le couple devienne constant, et
passe de la première rotation à la deuxième rotation lorsque la vitesse de rotation devient égale ou inférieure à une vitesse prédéterminée.

7. Dispositif de pesage (1) selon une quelconque des revendications précédentes, **caractérisé en ce que** :
le module de commande (50) effectue la rotation de la vis (22) d'un ¼ de tour ou davantage comme deuxième rotation, lors du passage de la première rotation à la deuxième rotation.
